# EUROPÄISCHE PATENTSCHRIFT

(11) **EP 2 019 766 B1**
(45) Veröffentlichungstag und Bekanntmachung des Hinweises auf die Patenterteilung: **26.08.2009**
(21) Anmeldenummer: 07729038.5
(22) Anmeldetag: 11.05.2007
(51) Int. Cl.: B60T 8/26, B60T 8/32, B62L 3/08

(54) **KRAFTRADBREMSANLAGE**
MOTORCYCLE BRAKING SYSTEM
SYSTÈME DE FREINAGE POUR MOTOCYCLE

(30) Priorität: 17.05.2006 DE 102006023341; 23.09.2006 DE 102006045038
(43) Veröffentlichungstag der Anmeldung: 04.02.2009
(73) Patentinhaber: Continental Teves AG & CO. OHG, 60488 Frankfurt (DE)
(72) Erfinder: HINZ, Axel, 61267 Neu-anspach (DE); VOGEL, Günther, 63303 Dreieich (DE)
(86) Internationale Anmeldenummer: PCT/EP2007/054586
(87) Internationale Veröffentlichungsnummer: WO 2007/131960

(56) Entgegenhaltungen:
- EP-A- 1 277 635
- EP-A- 1 650 093
- WO-A-92/05990
- WO-A-20/06040261
- WO-A-20/06040262
- DE-A1- 10 209 984

## Beschreibung

Die Erfindung betrifft eine Kraftradbremsanlage nach dem Oberbegriff des Patentanspruchs 1.

Aus der EP 1 277 635 A2 ist bereits eine derartige Kraftradbremsanlage bekannt. Die Bremsanlage weist einen hydraulisch betätigbaren Vorderrad- und Hinterradbremskreis auf, wobei jeder einzelne Bremskreis entweder an einem fuß- oder handbetätigten Hauptbremszylinder angeschlossen ist. Zur Bremsschlupfregelung sind im Vorderrad- als auch Hinterradbremskreis elektromagnetisch aktivierbare Ein- und Auslassventile eingesetzt, sowie mit einer Pumpe zum Druckaufbau in den beiden Bremskreisen. Der Hinterradbremskreis verfügt über eine zusätzliche Ventilanordnung, die bei manueller Betätigung des Vorderradbremskreises gleichzeitig über die Pumpe einen Druckaufbau an der Hinterradbremse ermöglicht, ohne das der Hauptbremszylinders des Hinterradbremskreises betätigt werden muss.

Am Vorderradbremskreis ist ein erster Drucksensor angeordnet, um die manuelle Betätigung des Vorderradbremskreises zu erfassen und die Pumpe zum Aufbau eines autonomen Bremsdruck im Hinterradbremskreis aktivieren zu können.

Abhängig vom sicheren Erkennen des Hauptbremszylinderdrucks im Vorderradbremskreis kann sodann die Pumpe elektrisch aktiviert und ein geregelter Bremsdruck in der Hinterradbremse aufgebaut werden.

Mit dem Anlauf der Pumpe stellt sich jedoch das Problem, dass Druckschwingungen initiiert werden, die auf den manuell betätigten Hauptbremszylinder zurückwirken und im Handbremshebel unangenehm spürbar sind.

Daher ist es die Aufgabe der vorliegenden Erfindung, eine Kraftradbremsanlage der bekannten Art derart zu verbessern, dass die beim Anlauf der Pumpe initiierten Druckschwingungen nicht oder nur gering auf den manuell betätigten Hauptbremszylinder zurückwirken können.

Diese Aufgabe wird für eine Kraftradbremsanlage der angegebenen Art mit den kennzeichnenden Merkmalen des Patentanspruchs 1 gelöst.

Weitere Merkmale und Vorteile der Erfindung gehen aus den Unteransprüchen sowie aus der nachfolgenden Beschreibung eines Ausführungsbeispiels anhand einer Zeichnung hervor.

Es zeigen:

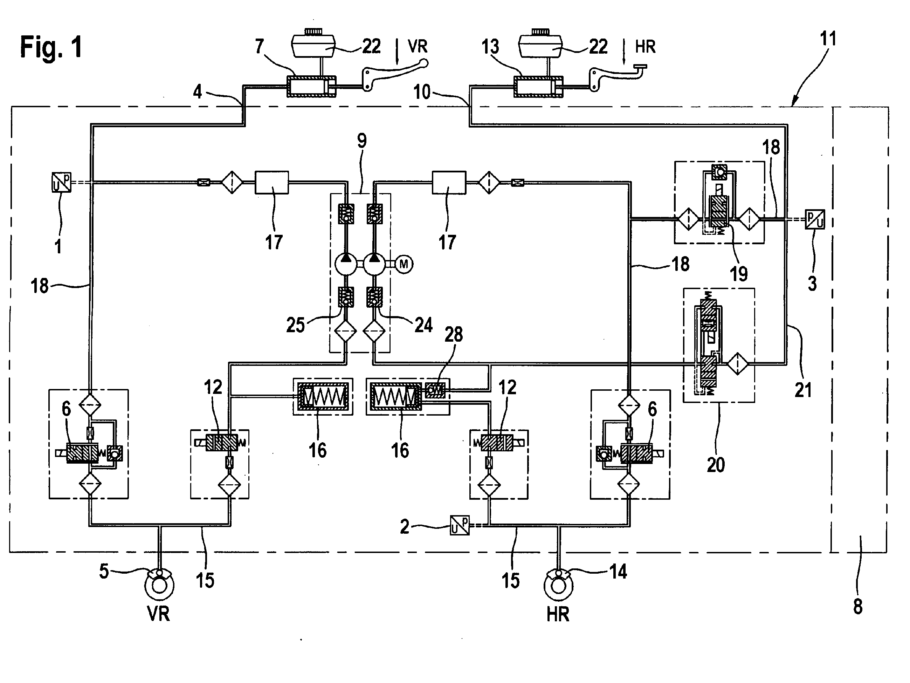

- Figur 1: den Hydraulikschaltplan für eine gegenüber dem Stand der Technik verbesserten Kraftradbremsanla- ge, deren Vorderradbremskreis bei autonomen Be- trieb der Hinterradbremse infolge einer Anhebung des Öffnungsdruck am Pumpensaugventil einer Rück- wirkung der Pumpe auf den Handbremshebel nicht oder nur geringfügig ausgesetzt ist,

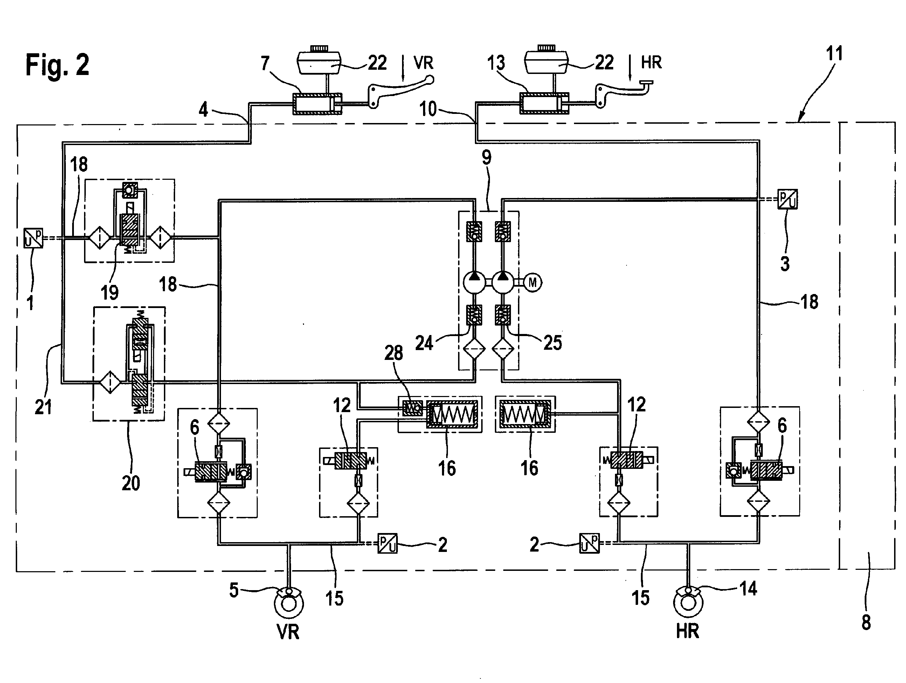

- Figur 2: einen Hydraulikschaltplan für eine Kraftradbrems- anlage in einer von Figur 1 abweichenden Ausfüh- rungsform, deren Vorderradbremskreis mit dem aus Figur 1 bekannten Trenn- und Umschaltventil verse- hen ist, sodass bei autonomen Betrieb des Vorder- radbremskreises eine Rückwirkung der Pumpe auf den mit dem Handbremshebel versehenen Hauptbremszylin- der verhindert ist,

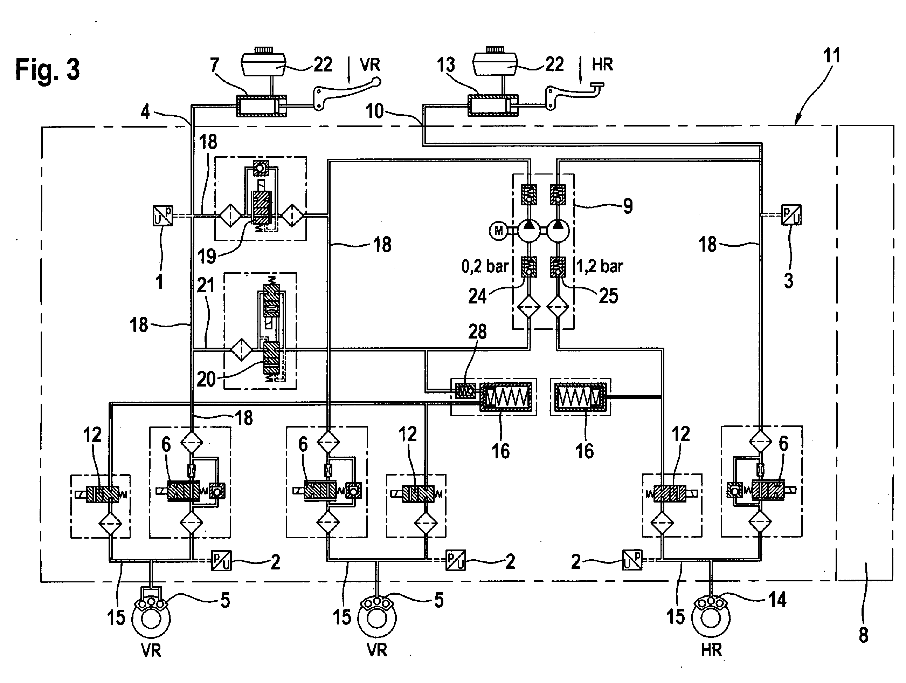

- Figur 3: den Hydraulikschaltplan nach Figur 2 erweitert um eine zweite Vorderradbremse oder alternativ mit einer Vorderradbremse mit mehreren unabhängig von- einander betätigbaren Radbremszylindern, die über eine Aufteilung der am Vorderradbremskreis ange- schlossenen Bremsleitung auf zwei Vorderradbremsen oder auf die unabhängig voneinander betätigbaren Radbremszylindern mit dem handbetätigbaren Haupt- bremszylinder verbunden sind,

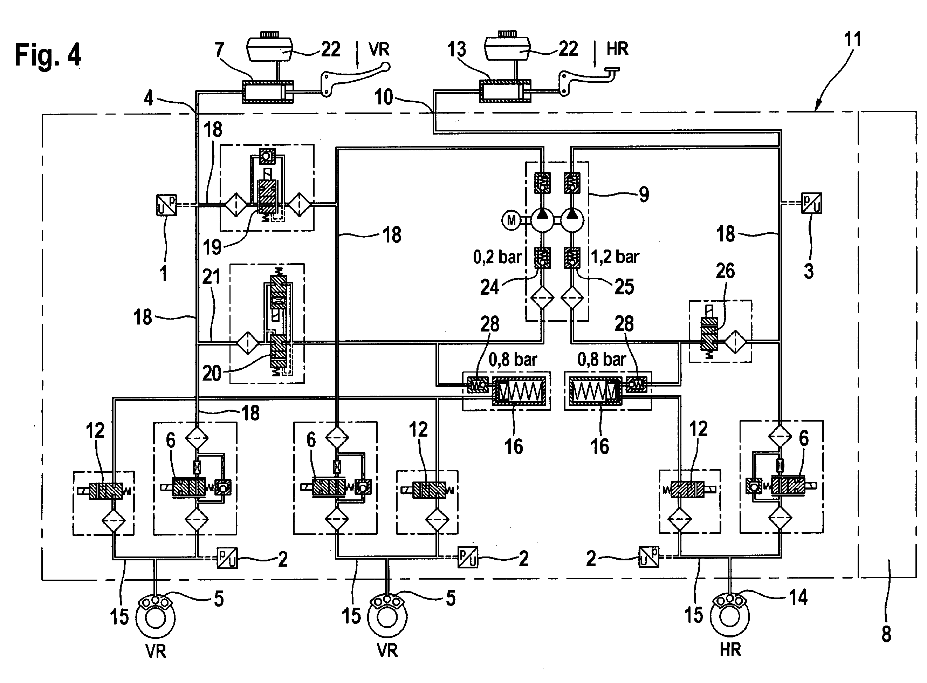

- Figur 4: den Hydraulikschaltplan nach Figur 3 zusätzlich mit einer Leitungsverbindung zwischen der Brems- leitung des Hinterradbremskreises und dem Pum- pensaugpfad, in die ein Sperrventil eingesetzt ist.

Die Figur 1 zeigt den Hydraulikschaltplan einer verbesserten neuen Kraftradbremsanlage in schematischer Darstellung. Die Bremsanlage besteht aus einem hydraulisch betätigbaren Vorderrad- und Hinterradbremskreis 4, 10, mit jeweils einem am Vorderradbremskreis 4 angeschlossenen, durch Handkraft proportional betätigbaren Hauptbremszylinder 7 und mit einem fußkraftproportional betätigbaren Hauptbremszylinder 13 an der Hinterradbremse 14.

Zur Bremsschlupfregelung sind im Vorderrad- als auch Hinterradbremskreis 4, 10 elektromagnetisch betätigbare Ein- und Auslassventile 6, 12 eingesetzt, wobei jeweils das in Grundstellung geöffnete Einlassventil 6 in die Bremsleitung 18 des Vorder- bzw. Hinterradbremskreises 4, 10 eingesetzt ist, welche den zugehörigen Hauptbremszylinder 7, 13 mit der Vorderrad- bzw. der Hinterradbremse 5, 14 verbindet. Das in Grundstellung geschlossene Auslassventil 12 ist jeweils in eine Rücklaufleitung 15 eines jeden Bremskreises eingesetzt, welche die Vorder- bzw. Hinterradbremse 5, 14 mit jeweils einem Niederdruckspeicher 16 und der Saugseite einer zweikreisig aufgeteilten Pumpe 9 verbindet, die nach dem Rückförderprinzip arbeitet. Die Pumpe 9 steht daher über in die beiden Bremskreise eingesetzte Geräuschdämpfungskammern 17 stromaufwärts zu den Einlassventilen 6 mit den Bremsleitungen 18 in Verbindung, so dass eine bedarfsgerechte Rückförderung des jeweils von der Vorder- bzw. Hinterradbremse 5, 14 abgelassenen Bremsflüssigkeitsvolumens gewährleistet ist.

Der Hinterradbremskreis 10 weist zusätzlich zu den abgebildeten Merkmalen des Vorderradbremskreises 4 ein zwischen dem Hauptbremszylinder 13 und dem Einlassventil 6 in die Bremsleitung 18 eingesetztes, elektromagnetisch betätigbares Trennventil 19 auf, das in seiner Grundstellung geöffnet ist. Ferner ist zwischen dem Trennventil 19 und dem Hauptbremszylinder 13 an die Bremsleitung 18 des Hinterradbremskreises 10 ein über ein elektrisches Umschaltventil 20 führender Saugpfad 21 zur Pumpe 9 angeschlossen, wodurch der im Hinterradbremskreis 10 wirksame Pumpenteil bei elektrischer Erregung des Umschaltventils 20 Druckmittel zum autonomen Druckaufbau in der Hinterradbremse 14 aus dem Hauptbremszylinder 13 zu entnehmen und zur Hinterradbremse 14 zu fördern vermag, während das Trennventil 19 zur Vermeidung einer Rückförderung in den Hauptbremszylinder 13 in seiner elektrisch erregten Sperrstellung verharrt.

Zur Erfassung des dem Vorderradbremskreis 4 zugeführten Hauptbremszylinderdrucks befindet sich stromaufwärts des Einlassventils 6 an der Bremsleitung 18 des Vorderradbremskreises 4 ein erster Drucksensor 1. Zur Erfassung des Radbremsdrucks im Hinterradbremskreis 10 ist ein zweiter Drucksensor 2 stromabwärts zum Einlassventil 6 am Hinterradbremskreis angeschlossen sowie ein dritter Drucksensor stromaufwärts zum Trennventil 19, wodurch auch die Betätigung des Hauptbremszylinders 13 sicher erkannt werden kann.

Durch die Einlassventile 6 lässt sich in der Zweikreisbremsanlage der in den Bremsleitungen 18 erzeugte Bremsdruck jederzeit begrenzen. Der Bremsdruckabbau in den Radbremsen geschieht über die elektromagnetisch aufschaltbaren Auslassventile 12 in Richtung der beiden Niederdruckspeicher 16. Die Einzelheiten hierzu sind der Funktionsbeschreibung zur Bremsschlupfregelung in einem der folgenden Beschreibungsabschnitte zu entnehmen.

Der mittels des ersten Drucksensors 1 im Vorderradbremskreis 4 erfasste Hauptbremszylinderdruck bildet die Führungsgröße zur elektrischen Aktivierung der im Hinterradbremskreis 10 wirksamen Pumpe 9, die im Zusammenwirken mit den Ein- und Auslassventilen 6, 12, dem Trenn- und Umschaltventil 19, 20 einen elektrohydraulischen Bremsdruckaufbau im Hinterradbremskreis 10 gemäß einer im Steuergerät 8 abgelegten elektronischen Bremskraftverteilungskennlinie bewirkt, wenn ausschließlich der am Vorderradbremskreis 4 angeschlossene Hauptbremszylinder 7 betätigt wird.

Zur Auswertung der Drucksensorsignale ist eine Logikschaltung im elektronischen Steuergerät 8 vorgesehen, in dem abhängig vom Auswerteergebnis der Drucksensorsignale mittels der elektrisch betätigbaren Pumpe 9 ein autonomer Hydraulikdruck im Hinterradbremskreis 10 erzeugt wird.

Das symbolisch dargestellte Steuergerät 8 bildet ein integrales Bestandteil einer Bremseinheit 11, das vorzugsweise zur elektrischen Kontaktierung auf die in der Bremseinheit 11 integrierten Drucksensoren und die darin integrierten Ein- und Auslassventile 6, 11 aufgesteckt ist. Die Bremseinheit 11 lässt sich somit aufgrund der besonders kompakten Bauweise in Nähe einer Batterie an einem Kraftradrahmen befestigen.

Grundsätzlich gilt:
1. Eine Blockierneigung des Vorder- bzw. des Hinterrades wird mittels nicht abgebildeter Raddrehzahlsensoren und deren Signalauswertung im Steuergerät sicher erkannt. Das im Vorderrad- bzw. im Hinterradbremskreis 4, 10 angeordnete Einlassventil 6 wird über das Steuergerät 8 elektromagnetisch geschlossen, um einen weiteren Druckaufbau im Vorderrad- bzw. Hinterradbremskreis 4, 10 zu unterbinden.
2. Sollte zur Reduzierung der Blockierneigung zusätzlich ein weiterer Druckabbau im Vorderrad- bzw. Hinterradbremskreis 4, 10 erforderlich sein, so wird dies durch das Öffnen des jeweils mit dem Niederdruckspeicher 16 verbindbaren, normalerweise stromlos geschlossenen Auslassventil 12 erreicht. Das Auslassventil 12 wird geschlossen, sobald die Radbeschleunigung wieder über ein bestimmtes Maß hinaus anwächst. In der Druckabbauphase bleibt das entsprechende Einlassventil 6 geschlossen, so dass sich der im Vorderrad- bzw. Hinterradbremskreis 4, 10 erzeugte Hauptbremszylinderdruck nicht auf den Vorderrad- bzw. Hinterradbremskreis 4, 10 fortpflanzen kann.
3. Wenn die ermittelten Schlupfwerte wieder einen Druckaufbau im Vorderrad- bzw. Hinterradbremskreis 4, 10 erlauben, wird das Einlassventil 6 entsprechend der Anforderung des im Steuergerät 8 integrierten Schlupfreglers zeitlich begrenzt geöffnet. Das für den Druckaufbau erforderliche Hydraulikvolumen wird von der Pumpe 9 zu Verfügung gestellt.

Außerhalb der Bremsschlupfregelung erfolgt aufgrund des hydraulischen Schaltungskonzepts bei (fußkraftproportionaler) Betätigung des am Hinterradbremskreises 10 angeschlossenen Hauptbremszylinders 13 ausschließlich eine kraftproportionale Druckbeaufschlagung der Hinterradbremse 14, d.h. der Vorderradbremskreis 4 verharrt bis zur (handkraftproportionalen) Betätigung des am Vorderradbremskreis 4 angeschlossenen Hauptbremszylinders 7 drucklos.

Als Besonderheit der vorgestellten Kraftradbremsanlage nach Fig. 1 gilt, dass bei kraftproportionaler Betätigung des Vorderradbremskreises 4 die Hinterradbremse 14 durch eine geeignete Pumpenansteuerung autonom mitgebremst wird. Die Pumpe 9 entnimmt hierzu über das elektrisch geöffnete Umschaltventil 20 Druckmittel aus dem Hauptbremszylinder 13 und fördert es zur Hinterradbremse 14. Hierbei verharrt das Trennventil 19 elektrisch betätigt in Schließstellung, wodurch gewährleistet ist, dass der Pumpendruck nicht in den Hauptbremszylinder 13 entweicht.

Andererseits ist aufgrund der Zweikreisigkeit der Pumpe 9 und des damit verbundenen gleichzeitigen Druckaufbaus in beiden Bremskreisen eine Rückwirkung des Pumpendrucks auf den Bremskreis, der den handbetätigten Hauptbremszylinder 7 aufweist, unerwünscht und muss daher bei einem autonomen und damit fremdansteuerbaren Druckaufbau im nicht manuell betätigten Bremskreis vermieden werden, weshalb erfindungsgemäß nach Fig. 1-4 eine Ventilschaltung vorgeschlagen wird, die eine Rückwirkung des Pumpendrucks auf den manuell betätigten Hauptbremszylinder vermeidet.

Die Pumpe 9 der verbesserten Kraftradbremsanlage nach Figur 1 weist deshalb für jeden Bremskreis eine Ventilschaltung mit unterschiedlichen Saugventilen 24, 25 auf, wobei das im ausschließlich manuell beaufschlagbaren Bremskreis (Vorderradbremskreis 4) angeordnete Saugventil 25 einen wesentlich höheren Öffnungsdruck (ca. 1,2 bar) aufweist als das im autonom beaufschlagbaren Bremskreis (Hinterradbremskreis 10) angeordnete Saugventil 24, dessen Öffnungsdruck vorzugsweise etwa 0,2 bar beträgt. Hierdurch ist gewährleistet, dass bei einem autonomen und damit über die Pumpe 9 ausgelösten Druckaufbau im nicht manuell betätigten Hinterradbremskreis 10 gleichzeitig eine Rückwirkung des Pumpendrucks auf den am Vorderradbremskreis 4 angeschlossenen, manuell betätigten Hauptbremszylinder 7 erheblich vermindert ist.

Die Hydraulikschaltung nach Figur 2 zeigt eine erfindungsgemäße Abwandlung der Schaltungsanordnung nach Figur 1, wonach die aus Figur 1 bekannte Hinterradbremskreis-Anordnung bezüglich des Trenn- und Umschaltventils 19, 20 als auch bezüglich des Druckhalteventils 28 auf den Vorderradbremskreis 4 übertragen wurde. Dementsprechend sind auch die beiden Pumpensaugventile 24, 25 in den beiden Bremskreisen vertauscht. Das mit dem höheren Öffnungsdruck versehene Pumpensaugventil 25 befindet sich somit im Hinterradbremskreis 10, wodurch sich im autonomen Bremsanlagenbetrieb die Rückwirkung des Pumpendrucks auf den fußbetätigten Hauptbremszylinder 13 mindert. Ferner ist abweichend von Figur 1 nunmehr in Figur 2 das Druckrückhalteventil 28 aus dem Hinterradbremskreis entfernt und dafür ausgangsseitig am Niederdruckspeicher 16 des Vorderradbremskreises 4 angeordnet, was dazu beiträgt, dass sich im Hinterradbremskreis 10 die Sekundärkreisentlüftung erleichtert. Im Hinterradbremskreis 10 ist nämlich der Niederdruckspeicher 16 direkt an einem Abzweig der Rücklaufleitung 15 angeschlossen, während der im Vorderradbremskreis 4 angeordnete Niederdruckspeicher 16 über die Rücklaufleitung 15 vorteilhaft in Richtung des Druckhaltventils 28 durchspült wird.

Ein autonomer Betrieb der Kraftradbremsanlage nach Figur 2 erfolgt dementsprechend über die (fußkraftproportionale) Betätigung des am Hinterradbremskreis 10 angeschlossenen Hauptbremszylinders 13, wodurch das nunmehr nach bekanntem Schaltschema (vergleiche Fig. 1) im Vorderradbremskreis 4 angeordnete Trenn- und Umschaltventil 19, 20 die nicht abgebildete, elektromagnetisch erregte Schaltstellung einnehmen, in welcher der am Vorderradbremskreis 4 angeschlossene Pumpenkreis saugseitig mit dem Hauptbremszylinder 4 verbunden, jedoch druckseitig vom Hauptbremszylinder 4 getrennt ist, während der am Hinterradbremskreis 10 angeschlossene Pumpenkreis infolge des erhöhten Öffnungsdruck des Saugventils 25 die Pumpenrückwirkung auf den Hauptbremszylinder 13 mindert. Da überdies der Hauptbremszylinder 13 in Figur 2 über ein Bremspedal fußkraftproportional betätigt wird, ist durch die gewählte Bremskreisaufteilung eine evtl. Pumpenrückwirkung auf den Hauptbremszylinder 13 kaum oder gar nicht vom Fahrer fühlbar.

Die Hydraulikschaltung nach Figur 3 zeigt eine erfindungsgemäße Erweiterung der Schaltungsanordnung nach Figur 2, wonach in der erfindungsgemäßen Ausführungsform nach Figur 3 die Vorderradbremse 5 entweder aus zwei funktional voneinander getrennten Bremssätteln oder über einen Mehrkolbenbremse verfügt, deren Bremskolben unabhängig voneinander über eine zweigeteilte Bremsleitung 18 mit dem Vorderradbremskreis 4 verbunden sind. In Figur 3 ist somit der aus Figur 2 bekannte, autonom regelbare Vorderradbremskreis 4 in Richtung der symbolisch dargestellten zweiten Vorderradbremse 5 um einen Leitungsabzweig ergänzt, in den zur Bremsschlupfregelung stromaufwärts zur zweiten Vorderradbremse 5 ein Einlassventil 6 und stromabwärts zur zweiten Radbremse 5 in eine weitere Rücklaufleitung 15 ein Auslassventil 12 der bereits zitierten Bauart eingesetzt sind. Der Leitungsabzweig ist stromaufwärts zum Trenn- und Umschaltventil 19, 20 an der Bremsleitung 18 des Vorderradbremskreises 4 abgezweigt, sodass die symbolisch dargestellte zweite Vorderradbremse 5 nicht autonom regelbar, sondern nur manuell betätigbar ist. Dies hat den Vorteil, dass während einer autonomen Bremsdruckregelung in der ersten Vorderradbremse 5 ein komfortables Einbremsen in den Vorderradbremskreis 4 möglich ist, da in der symbolisch dargestellten zweiten Vorderradbremse 5 ungehindert ein Bremsdruck aufgebaut werden kann.

In vorliegendem Ausführungsbeispiel nach Figur 3 ist somit eine der beiden Vorderradbremsen 5 nur manuell über den Hauptbremszylinder 7 betätigbar, sodass jederzeit ein komfortables Bremsbetätigungsgefühl am Bremshebel des Hauptbremszylinders 7 wahrnehmbar ist.

In Figur 3 entspricht der Aufbau des Hinterradbremskreises 10 in allen wesentlichen Elementen der Darstellung des Hinterradbremskreises 10 nach Figur 2.

Wie in Figur 3 beispielhaft skizziert ist, kann auch die Hinterradbremse 14 als Mehrkolbenbremse ausgeführt sein, die alle über die Bremsleitung 18 des Hinterradbremskreises 10 am zweiten Hauptbremszylinder 13 angeschlossen sind.

Als weiteres, zweckmäßiges Unterscheidungsmerkmal zu Fig. 1 weisen die Schaltungsanordnungen nach Fig. 2, 3, 4 eine Pumpe 9 auf, deren im Vorderradbremskreis 4 angeordnetes Pumpensaugventil 24 einen wesentlich geringeren Öffnungsdruck (ca. 0,2 bar) als das im Hinterradbremskreis 10 angeordnete weitere Pumpensaugventil 25 (ca. 1,2 bar), wodurch eine sogenannte Leerlaufpulsation der Pumpe 9 im Hinterradbremskreis 4 in Richtung des zweiten Hauptbremszylinders 7 vorteilhaft vermieden ist, wodurch dessen Fußbremshebel rückwirkungsfrei betätigt werden kann.

Die Hydraulikschaltung nach Figur 4 unterscheidet sich im Wesentlichen durch zwei weitere zusätzliche Merkmale von der Schaltungsanordnung nach Figur 3, wonach zusätzlich:
1. Eine mit einem Sperrventil 26 versehene Leitung die Bremsleitung 18 des Hinterradbremskreises 10 mit dem Pumpensaugpfad 3 im Hinterradbremskreis 10 verbindet,
2. Beide Niederdruckspeicher 16 mit Druckrückhalteventile 17 versehen sind, die einen identischen Öffnungsdruck (ca. 0, 8 bar) aufweisen.

Abweichend von Figur 1 ist in den Schaltplänen nach Fig. 2 bis 4 der Vorderradbremskreis jeweils abhängig von der manuellen Betätigung des Hinterradbremskreises autonom regelbar, wobei zur präzisen Erfassung des jeweils an der Hinterradbremse 14 als auch an der Vorderradbremse anstehenden Bremsdrucks, insbesondere für eine Bremsschlupfregelung in beiden Bremskreise, sowohl an der Hinterradbremse 14 als auch an der Vorderradbremse ein Drucksensor 2 angeordnet ist.

Soweit bisher nicht auf alle weiteren aus den Figuren 2 bis 4 ersichtlichen Einzelheiten eingegangen wurde, entsprechen diese funktionell und baulich dem erläuterten Schaltplan nach Figur 1, wobei alle Figuren für identische Elemente gleiche Bezugszeichen aufweisen.

Zusammenfassend lässt sich somit für alle Ausführungsbeispiele nach Fig. 1-4 festhalten, dass erfindungsgemäß in demjenigen Bremskreis, welcher das Trenn- und Umschaltventil 19, 20 nicht aufweist, das Pumpensaugventil 25 einen höheren Öffnungsdruck aufweist als das Pumpensaugventil 24, welches in demjenigen Bremskreis angeordnet ist, welcher mit dem Trenn- und Umschaltventil 19, 20 versehen ist.

Hierdurch ist während einem autonomen Betrieb der Kraftradbremsanlage eine pulsierende Rückwirkung der Pumpe 9 in demjenigen Bremskreis auf den hand- oder fußbetätigten Hauptbremszylinder 7; 13 verhindert, der nicht über ein Trenn-und Umschaltventil 19, 20 verfügt.

Daraus folgt entsprechend dem Ausführungsbeispiel nach Figur 1, dass im Vorderradbremskreis 4, welcher das Trenn- und Umschaltventil 19, 20 nicht aufweist, das Pumpensaugventil 25 einen höheren Öffnungsdruck aufweist als das Pumpensaugventil 24, das im Hinterradbremskreis 10 angeordnet ist, welcher das Trenn- und Umschaltventil 19, 20 aufweist.

Alternativ dazu zeigt die Figur 2 ein Ausführungsbeispiel, bei dem im Hinterradbremskreis 10, welcher das Trenn- und Umschaltventil 19, 20 nicht aufweist, das Pumpensaugventil 25 einen höheren Öffnungsdruck aufweist als das Pumpensaugventil 24, das im Vorderradbremskreis 4 angeordnet ist, welcher mit dem Trenn- und Umschaltventil 19, 20 versehen ist.

Ergänzend zu Figur 2 zeigt Figur 3, dass an demjenigen Bremskreis (Vorderradbremskreis 4), welcher das Trenn- und Umschaltventil 19, 20 aufweist, stromaufwärts zum Trenn- und Umschaltventil 19, 20 an den Bremskreis (Vorderradbremskreis 4) eine weitere Radbremse (Vorderradbremse 5) bzw. ein separat beaufschlagbarer Bremskolben angeschlossen ist, wodurch über den an den Vorderradbremskreis 4 angeschlossenen Hauptbremszylinder 7 (infolge der Volumenaufnahme der weiteren Radbremse bzw. Bremskolbens) am abgebildeten Bremshebel ein für eine konventionelle Bremsbetätigung gewünschtes Bremshebelgefühl gewährleistet ist.

Die Figur 4 zeigt schließlich wegen der Anordnung eine Druckrückhalteventils 28 am Ausgang des Niederdruckspeichers 16 eine sinnvolle Maßnahme zur Evakuierung des Sekundärkreises, wozu stromaufwärts zum Einlassventil 6 an der Bremsleitung des Hinterradbremskreises ein elektromagnetisch zu öffnendes Sperrventil 26 angeschlossen ist, das stromabwärts zum Druckrückhalteventil 28 mit der Saugseite der Pumpe 9 verbindbar ist.

Bezüglich der Auslegung der Pumpe 9 ist für alle Ausführungsbeispiele zu beachten, dass die Differenz der Öffnungsdrücke beider Pumpensaugventile 24, 25 zwischen 0,5 bis 1,5 bar, vorzugsweise 1 bar beträgt. Der Öffnungsdruck des Pumpensaugventils 24, welches in demjenigen Bremskreis angeordnet ist, welcher das Trenn- und Umschaltventil 19, 20 aufweist, beträgt zwischen 0,1 bis 0,4 bar, vorzugsweise 0,2 bar, um ein möglichst hohe Förderleistung zu erzielen. Hingegen beträgt der Öffnungsdruck des Pumpensaugventils 25, welches in demjenigen Bremskreis angeordnet ist, welcher das Trenn- und Umschaltventil 19, 20 nicht aufweist, zwischen 0,6 bis 1,6 bar, vorzugsweise 1,2 bar beträgt, wodurch infolge der Verminderung des Pumpensaugverhaltens Druckpulsationen nicht am hand- bzw. fußbetätigten Hauptbremszylinder 7, 13 wahrnehmbar sind.

Beide Pumpensaugventile 24, 25 sind in der einfachsten Ausführungsform als in Grundstellung durch Federkraft geschlossene Rückschlagventile, vorzugsweise Kugelrückschlagventile ausgeführt, die hydraulisch aufschaltbar sind. Theoretisch wäre auch eine elektromagnetische Saugventilsteuerung denkbar.

Die Pumpe 9 ist in allen Ausführungsbeispielen als Kolbenpumpe ausgeführt, deren Pumpenkolben mit den beiden Pumpensaugventilen 24, 25 in der blockförmigen Bremseinheit 11 zusammengefasst sind, in der die Ein- und Auslassventile 6, 12, das Trenn- und Umschaltventil 19, 20, die Drucksensoren 1, 2, 3, sowie die beiden Niederdruckspeicher 16 aufgenommen sind.

Bezüglich den beiden Niederdruckspeichern 16 ist bei allen Ausführungsbeispielen zu beachten, dass jeweils derjenige Niederdruckspeicher 16, welcher im Bremskreis angeordnet ist, der nicht das Trenn- und Umschaltventil 19, 20 aufweist, kein Druckrückhalteventil 28 benötigt, was die Sekundärkreisentlüftung und den Bauaufwand in diesem Bereich begünstigt.

## Patentansprüche

1. Kraftradbremsanlage mit einem hydraulisch betätigbaren Vorderrad- (4) und Hinterradbremskreis (10), mit zwei Hauptbremszylindern (7,13) zur unabhängigen Betätigung beider Bremskreise (4,10), mit einem zur Bremsdruckregelung in jedem Bremskreis vorgesehenen Ein- und Auslassventil (6, 12), mit einer zweikreisigen Pumpe (9) zur Druckversorgung des Vorderrad- als auch Hinterradbremskreises (4, 10), die nach dem Rückförderprinzip arbeitet, mit einem Pumpensaugventil (24, 25) und einem Pumpendruckventil in jedem Pumpenkreis, mit einem stromauf des Pumpensaugventils (24, 25) an jeder Pumpensaugseite angeschlossenen Niederdruckspeicher (16), mit einer ersten Radbremse (5) in einem ersten Bremskreis (4) der oben genannten, Vorderrad- und Hinterradbremskreise und einer zweiten Radbrems (14) in einem zweiten Bremskreis (10) der oben genannten, Vorderrad- und Hinterradbremskreise, sowie mit einem Trenn-(19) und Umschaltventil (20) in demjenigen Bremskreis (10, 4), der zum autonomen Bremsdruckaufbau in einer der beiden Radbremsen (14, 5) unabhängig von einer Betätigung des ihm zugeordneten Hauptbremszylinders (13, 7) vom Förderdruck der Pumpe (9) beaufschlagbar ist, **dadurch gekennzeichnet, dass** in demjenigen Bremskreis, welcher das Trenn- und Umschaltventil (19, 20) nicht aufweist, das Pumpensaugventil (25) einen höheren Öffnungsdruck aufweist als das Pumpensaugventil (24), welches in demjenigen Bremskreis angeordnet ist, welcher das Trenn- und Umschaltventil (19, 20) aufweist.

2. Kraftradbremsanlage nach Anspruch 1, **dadurch gekennzeichnet, dass** im Vorderradbremskreis (4), welcher das Trenn- und Umschaltventil (19, 20) nicht aufweist, das Pumpensaugventil (25) einen höheren Öffnungsdruck aufweist als das Pumpensaugventil (24), das im Hinterradbremskreis (10) angeordnet ist, welcher das Trenn- und Umschaltventil (19, 20) aufweist.

3. Kraftradbremsanlage nach Anspruch 1, **dadurch gekennzeichnet, dass** im Hinterradbremskreis (10), welcher das Trenn- und Umschaltventil (19, 20) nicht aufweist, das Pumpensaugventil (25) einen höheren Öffnungsdruck aufweist als das Pumpensaugventil (24), das im Vorderradbremskreis (4) angeordnet ist, welcher das Trenn- und Umschaltventil (19, 20) aufweist.

4. Kraftradbremsanlage nach einem der vorangegangenen Ansprüche, **dadurch gekennzeichnet, dass** die Differenz der Öffnungsdrücke beider Pumpensaugventile (24, 25) zwischen 0,5 bis 1,5 bar, vorzugsweise 1 bar beträgt.

5. Kraftradbremsanlage nach einem der vorangegangenen Ansprüche, **dadurch gekennzeichnet, dass** der Öffnungsdruck des Pumpensaugventils (24), welches in demjenigen Bremskreis angeordnet ist, welcher das Trenn- und Umschaltventil (19, 20) aufweist, zwischen 0,1 bis 0,4 bar, vorzugsweise 0,2 bar beträgt.

6. Kraftradbremsanlage nach einem der vorangegangenen Ansprüche, **dadurch gekennzeichnet, dass** der Öffnungsdruck des Pumpensaugventils (25), welches in demjenigen Bremskreis angeordnet ist, welcher das Trenn- und Umschaltventil (19, 20) nicht aufweist, zwischen 0,6 bis 1,6 bar, vorzugsweise 1,2 bar beträgt.

7. Kraftradbremsanlage nach Anspruch 6, **dadurch gekennzeichnet, dass** beide Pumpensaugventile (24, 25) als in Grundstellung durch Federkraft geschlossene Rückschlagventile, vorzugsweise Kugelrückschlagventile ausgeführt sind, die hydraulisch aufschaltbar sind.

8. Kraftradbremsanlage nach einem der vorangegangenen Ansprüche, **dadurch gekennzeichnet, dass** die Pumpe (9) als doppelflutige Kolbenpumpe ausgeführt ist, deren Pumpenkolben mit den beiden Pumpensaugventilen (24, 25) in einer blockförmigen Bremseinheit (11) zusammengefasst sind, in der mehrere Ein- und Auslassventile (6, 12), das Trenn- und Umschaltventil (19, 20), mehrere Drucksensoren (1, 2, 3), sowie die beiden Niederdruckspeicher aufgenommen sind.

9. Kraftradbremsanlage nach einem der vorangegangen Ansprüche, **dadurch gekennzeichnet, dass** an demjenigen Bremskreis, welcher das Trenn- und Umschaltventil (19, 20) aufweist, stromaufwärts zum Trenn- und Umschaltventil (19, 20) an den Bremskreis eine weitere Radbremse (5) angeschlossen ist, die über den an den Bremskreis angeschlossenen Hauptbremszylinder (7) direkt betätigbar ist.

10. Kraftradbremsanlage nach Anspruch 9, **dadurch gekennzeichnet, dass** der Bremsdruck in der weiteren Radbremse (5) über weitere Ein- und Auslassventile (6, 12) regelbar ist.

## Claims

1. Motorcycle brake system having a hydraulically actuable front wheel brake circuit (4) and rear wheel brake circuit (10), having two master brake cylinders (7, 13) for the independent actuation of the two brake circuits (4, 10), having an inlet and outlet valve (6, 12) provided for brake pressure regulation in each brake circuit, having a two-circuit pump (9) for the supply of pressure to the front wheel and rear wheel brake circuits (4, 10), which pump operates on the feedback principle, having a pump suction valve (24, 25) and a pump pressure valve in each pump circuit, having a low-pressure accumulator (16) connected to each pump suction side upstream of the pump suction valve (24, 25), having a first wheel brake (5) in a first brake circuit (4) of the above-mentioned front wheel and rear wheel brake circuits and having a second wheel brake (14) in a second brake circuit (10) of the above-mentioned front wheel and rear wheel brake circuits, and having a cut-off valve (19) and switching valve (20) in that brake circuit (10, 4) which, for an autonomous build-up of brake pressure in one of the two wheel brakes (14, 5), can be acted on by the feed pressure of the pump (9) independently of an actuation of the master brake cylinder (13, 7) assigned to said wheel brake, **characterized in that**, **in that** brake circuit which does not have the cut-off valve (19) and switching valve (20), the pump suction valve (25) has a higher opening pressure than the pump suction valve (24) which is arranged **in that** brake circuit which has the cut-off valve (19) and switching valve (20).

2. Motorcycle brake system according to Claim 1, **characterized in that**, in the front wheel brake circuit (4), which does not have the cut-off valve (19) and switching valve (20), the pump suction valve (25) has a higher opening pressure than the pump suction valve (24) which is arranged in the rear wheel brake circuit (10), which has the cut-off valve (19) and switching valve (20).

3. Motorcycle brake system according to Claim 1, **characterized in that**, in the rear wheel brake circuit (10), which does not have the cut-off valve (19) and switching valve (20), the pump suction valve (25) has a higher opening pressure than the pump suction valve (24) which is arranged in the front wheel brake circuit (4), which has the cut-off valve (19) and switching valve (20).

4. Motorcycle brake system according to one of the preceding claims, **characterized in that** the difference in the opening pressures of the two pump suction valves (24, 25) is between 0.5 and 1.5 bar, preferably 1 bar.

5. Motorcycle brake system according to one of the preceding claims, **characterized in that** the opening pressure of the pump suction valve (24) which is arranged **in that** brake circuit which has the cut-off valve (19) and switching valve (20) is between 0.1 and 0.4 bar, preferably 0.2 bar.

6. Motorcycle brake system according to one of the preceding claims, **characterized in that** the opening pressure of the pump suction valve (25) which is arranged **in that** brake circuit which does not have the cut-off valve (19) and switching valve (20) is between 0.6 and 1.6 bar, preferably 1.2 bar.

7. Motorcycle brake system according to Claim 6, **characterized in that** the two pump suction valves (24, 25) are designed as non-return valves, preferably non-return ball valves, which are closed by spring force in the home position and which can be opened hydraulically.

8. Motorcycle brake system according to one of the preceding claims, **characterized in that** the pump (9) is designed as a double-flow piston pump whose pump pistons are combined with the two pump suction valves (24, 25) in a block-like brake unit (11) which serves to accommodate a plurality of inlet and outlet valves (6, 12), the cut-off valve (19) and switching valve (20), a plurality of pressure sensors (1, 2, 3) and the two low-pressure accumulators.

9. Motorcycle brake system according to one of the preceding claims, **characterized in that that** brake circuit which has the cut-off valve (19) and switching valve (20) has connected to it, upstream of the cut-off valve (19) and switching valve (20), a further wheel brake (5) which can be directly actuated by means of the master brake cylinder (7) which is connected to the brake circuit.

10. Motorcycle brake system according to Claim 9, **characterized in that** the brake pressure in the further wheel brake (5) can be regulated by means of further inlet and outlet valves (6, 12)

## Revendications

1. Système de freinage pour motocyclette, comprenant un circuit de freinage de roue avant (4) et de roue arrière (10) à commande hydraulique, avec deux cylindres de freinage principaux (7, 13) pour la commande indépendante des deux circuits de freinage (4, 10), avec une soupape d'entrée et une soupape de sortie (6, 12) prévues dans chaque circuit de freinage pour la régulation de la pression de freinage, avec une pompe (9) à deux circuits pour l'alimentation en pression du circuit de freinage de roue avant et de roue arrière (4, 10), qui fonctionne selon le principe de refoulement, avec une soupape d'aspiration de pompe (24, 25) et une soupape de pression de pompe dans chaque circuit de pompe, avec un accumulateur basse pression (16) raccordé en amont de la soupape d'aspiration de pompe (24, 25) de chaque côté d'aspiration de la pompe, avec un premier frein de roue (5) dans un premier circuit de freinage (4) des circuits susmentionnés de freinage de roue avant et de roue arrière, et un deuxième frein de roue (14) dans un deuxième circuit de freinage (10) des circuits susmentionnés de freinage de roue avant et de roue arrière, ainsi qu'avec une soupape de coupure (19) et d'inversion (20) dans chaque circuit de freinage (10, 4), qui peuvent être sollicitées par la pression de refoulement de la pompe (9) pour augmenter de manière autonome la pression de freinage dans l'un des deux freins de roue (14, 5) indépendamment d'un actionnement du cylindre de freinage principal (13, 7) qui lui est associé, **caractérisé en ce que** dans le circuit de freinage qui ne présente pas la soupape de coupure et d'inversion (19, 20), la soupape d'aspiration de pompe (25) présente une pression d'ouverture plus élevée que la soupape d'aspiration de pompe (24) qui est disposée dans le circuit de freinage qui présente la soupape de coupure et d'inversion (19, 20).

2. Système de freinage pour motocyclette selon la revendication 1, **caractérisé en ce que** dans le circuit de freinage de roue avant (4), qui ne présente pas la soupape de coupure et d'inversion (19, 20), la soupape d'aspiration de pompe (25) présente une plus grande pression d'ouverture que la soupape d'aspiration de pompe (24) qui est disposée dans le circuit de freinage de roue arrière (10), qui présente la soupape de coupure et d'inversion (19, 20).

3. Système de freinage pour motocyclette selon la revendication 1, **caractérisé en ce que** dans le circuit de freinage de roue arrière (10) qui ne présente pas la soupape de coupure et d'inversion (19, 20), la soupape d'aspiration de pompe (25) présente une plus grande pression d'ouverture que la soupape d'aspiration de pompe (24) qui est disposée dans le circuit de freinage de roue avant (4) qui présente la soupape de coupure et d'inversion (19, 20).

4. Système de freinage pour motocyclette selon l'une quelconque des revendications précédentes, **caractérisé en ce que** la différence des pressions d'ouverture des deux soupapes d'aspiration de pompe (24, 25) est comprise entre 0,5 à 1,5 bar, de préférence est de 1 bar.

5. Système de freinage pour motocyclette selon l'une quelconque des revendications précédentes, **caractérisé en ce que** la pression d'ouverture de la soupape d'aspiration de pompe (24) qui est disposée dans le circuit de freinage qui présente la soupape de coupure et d'inversion (19, 20), est comprise entre 0,1 et 0,4 bar, de préférence vaut 0,2 bar.

6. Système de freinage pour motocyclette selon l'une quelconque des revendications précédentes, **caractérisé en ce que** la pression d'ouverture de la soupape d'aspiration de pompe (25) qui est disposée dans le circuit de freinage qui ne présente pas la soupape de coupure et d'inversion (19, 20), est comprise entre 0,6 et 1,6 bar, de préférence vaut 1,2 bar.

7. Système de freinage pour motocyclette selon la revendication 6, **caractérisé en ce que** les deux soupapes d'aspiration de pompe (24, 25) sont réalisées sous forme de soupapes de non retour fermées en position de base par la force d'un ressort, de préférence des soupapes de non retour à bille, qui peuvent être commutées hydrauliquement.

8. Système de freinage pour motocyclette selon l'une quelconque des revendications précédentes, **caractérisé en ce que** la pompe (9) est réalisée sous forme d'une pompe à piston à double flux, dont les pistons de pompe sont réunis aux deux soupapes d'aspiration de pompe (24, 25) dans une unité de freinage en forme de bloc (11), dans laquelle sont reçus plusieurs soupapes d'entrée et de sortie (6, 12), la soupape de coupure et d'inversion (19, 20), plusieurs capteurs de pression (1, 2, 3) ainsi que les deux accumulateurs de basse pression.

9. Système de freinage pour motocyclette selon l'une quelconque des revendications précédentes, **caractérisé en ce qu'**au niveau du circuit de freinage qui présente la soupape de coupure et d'inversion (19, 20), en aval de la soupape de coupure et d'inversion (19, 20), un autre frein de roue (5) est raccordé au circuit de freinage, lequel peut être directement commandé par le biais du cylindre de freinage principal (7) raccordé au circuit de freinage.

10. Système de freinage pour motocyclette selon la revendication 9, **caractérisé en ce que** la pression de freinage dans l'autre frein de roue (5) peut être régulée par le biais d'autres soupapes d'entrée et de sortie (6, 12).
